# FASCICULE DE BREVET EUROPEEN

(11) **EP 1 557 502 B1**
(45) Date de publication et mention de la délivrance du brevet: **08.04.2009**
(21) Numéro de dépôt: 05300056.8
(22) Date de dépôt: 25.01.2005
(51) Int. Cl.: E04B 1/61, F16B 12/60, E04B 2/74, E04F 13/08, F16B 5/00

(54) **Elément de solidarisation réversible, panneaux et rangements mettant en oeuvre de tels éléments**
Umkehrbares Solidarisierungselement, Bretter und Ordnen, die solche Elemente verwirklichen
Reversible element of solidarisation, panels and arrangements implementing of such elements

(30) Priorité: 26.01.2004 FR 0450131
(43) Date de publication de la demande: 27.07.2005
(73) Titulaire: MOBIMUR, 38140 SAINT BLAISE LE BUIS (FR)
(72) Inventeur: BRIOUDE, Yvon, 07600, VALS LES BAINS (FR)
(74) Mandataire: Vuillermoz, Bruno

(56) Documents cités:
- US-A- 1 337 799
- US-A- 4 646 497
- US-A1- 2003 016 992

## Description

### Domaine Technique

L'invention se rapporte au domaine de l'assemblage de panneaux pouvant permettre de réaliser des rangements, mais également de séparations pour délimiter des espaces à l'intérieur d'une salle de grande dimension. Les panneaux utilisés sont alors appelés des panneaux de parement ou panneaux de cloisons.

L'invention concerne un élément de solidarisation réversible qui peut donc être rapportée soit sur un panneau, soit sur une armature métallique destinée à maintenir le panneau en position.

### Art antérieur

De façon générale, les éléments de solidarisation réversibles se composent de plusieurs éléments de formes différentes coopérant entre eux.

Il est ainsi connu d'utiliser un bouton et un contre-bouton présentant des géométries totalement différentes. De tels éléments permettent d'accrocher un panneau sur un support qui est soit un autre panneau, soit une armature métallique. Il est ainsi décrit dans le document FR 2 737 264 un tel dispositif permettant de maintenir et de coincer le bouton dans le contre bouton.

Ainsi, ce dispositif nécessite au moins deux pièces dont la géométrie peut être complexe à réaliser et qui nécessite la mise en place selon un protocole particulier des différents éléments. Cet assemblage nécessite donc de concevoir plusieurs pièces et engendre des coûts important. De plus cet assemblage génère des contraintes de stock et d'approvisionnement car il faut avoir le même nombre de boutons et de contre-boutons lorsque l'on souhaite ériger une cloison ou un meuble avec de tels éléments.

On a également décrit dans le document US-A-4 646 497 un élément de solidarisation, muni d'un organe male et d'un organe femelle, et destiné à coopérer avec un élément identique. Un tel élément ne permet pas cependant d'assurer un auto-centrage ni un auto-serrage avec un autre élément de même nature.

### Exposé de l'Invention

L'invention concerne donc un élément de solidarisation réversible comportant quatre faces parallèles deux à deux, destiné à permettre la fixation d'une paroi sur une structure porteuse.

Selon l'invention, l'élément de solidarisation se caractérise en ce qu'il comporte à la fois, au niveau de l'une de ses extrémités, une excroissance faisant office d'organe mâle, et un logement faisant office d'organe femelle. Ces organes mâle et femelle sont complémentaires de façon à permettre l'assemblage réversible desdits organes mâle et femelle lorsque deux des éléments en question coopèrent entre eux.

Autrement dit, l'élément de solidarisation présente une forme parallélépipédique rectangle allongée, dont l'une de ses extrémités comporte à la fois une excroissance et un logement faisant office respectivement d'organes mâle et femelle. Cet agencement permet grâce à deux éléments de solidarisation identiques, l'un disposé sur la paroi, et l'autre sur la structure porteuse, de réaliser la mise en position et le maintien de la paroi. Il est donc nécessaire d'inverser les orientations des éléments respectifs disposés sur la paroi et la structure porteuse pour permettre leur coopération, et ainsi leur assemblage réversible.

Avantageusement, l'organe mâle peut comporter deux chants inclinés concourants au niveau de l'extrémité libre dudit organe mâle. Autrement dit, l'organe mâle est une excroissance qui comporte un profil en forme de V retourné qui est défini par deux chants inclinés.

En pratique, l'organe femelle peut comporter deux chants inclinés. Autrement dit, l'organe femelle se présente sous la forme d'une rainure en V définie par les deux chants inclinés.

Avantageusement, la zone de concours des deux chants inclinés de l'organe femelle définit une zone d'appui éventuel de l'extrémité libre de l'organe mâle d'un second élément coopérant avec l'élément en question.

Autrement dit, la zone de concours des chants inclinés de l'organe femelle peut éventuellement servir d'appui à l'extrémité libre de l'organe mâle d'un second élément lorsqu'il coopère avec l'élément en question. Ainsi, lorsque deux éléments sont assemblés, l'appui peut se faire d'une part au niveau des extrémités présentant une face plane et d'autre part au niveau de l'extrémité libre de l'organe mâle avec le fond du logement faisant office d'organe femelle.

En pratique, les chants inclinés respectivement des organes mâle et femelle peuvent être inscrits dans un même plan. Autrement dit, les chants inclinés des organes mâle et femelle peuvent se prolonger avec la même inclinaison.

Avantageusement, les organes mâle et femelle comportent un profil elliptique, favorisant le centrage des éléments entre eux lors de leur coopération.

Autrement dit, les chants inclinés permettent le centrage selon un plan perpendiculaire à ces chants et le profil elliptique des organes mâle et femelle permet de faciliter le centrage selon un deuxième plan perpendiculaire au premier. De cette manière, on réalise le centrage d'un élément par rapport à un autre lorsque l'on veut réaliser l'assemblage de deux éléments. Cet agencement permet donc de faciliter le centrage selon deux directions. Un résultat analogue peut également être obtenu au moyen d'une excroissance et d'un logement de forme conique.

En pratique, l'élément peut comporter deux jeux de deux perçages débouchant sur chacune de ses faces de façon à permettre la solidarisation de l'une de ses quatre faces sur un support au moyen de deux vis.

Autrement dit, un élément peut être solidarisé sur un support, l'une de ses quatre faces étant en contact avec ce support, au moyen de deux vis le traversant pour le maintenir en position. Ainsi, chaque face est percée de deux trous pour permettre le libre passage des vis.

Avantageusement, les perçages selon deux faces adjacentes peuvent être de même diamètre. De cette manière, il est possible de fixer un élément sur une paroi ou un support au moyen d'un seul type de vis.

En pratique, les perçages selon deux faces adjacentes peuvent comporter des axes sécants entre eux. De cette manière, quelque soit la face sur laquelle il est rapporté sur le support, ils se trouvent positionnés à la même hauteur.

Avantageusement, les arêtes définies par l'intersection de deux faces adjacentes de l'élément peuvent être chanfreinées de façon à faciliter le positionnement de l'élément sur son support. Autrement dit, les arêtes vives entre les quatre faces de l'élément sont supprimées, ce qui permet de fournir un guide lors du positionnement de l'élément sur son support.

En pratique, l'élément peut être obtenu par moulage dans un matériau choisi dans le groupe comprenant les polyamides, les polyamides chargés en fibres de verre, les alliages à base de zinc, tels que par exemple commercialisés sous la marque déposée « ZAMAK », l'aluminium, l'acier, l'acier inoxydable, et de manière générale tout matériau susceptible de convenir pour la fabrication d'un tel élément.

Selon un premier mode de réalisation, un panneau de parement peut comporter un élément tel que précédemment décrit, qui est apte à coopérer avec un autre élément solidarisé à une ossature métallique.

Autrement dit, les deux éléments sont orientés dans des directions opposées pour permettre aux organes mâle et femelle de chaque élément de venir correspondre avec ceux de l'autre élément.

Selon un deuxième mode de réalisation, un panneau de cloison peut comporter au moins un élément tel que précédemment décrit, qui est apte à coopérer avec un second élément solidarisé à une autre cloison.

Autrement dit, dans ce mode de réalisation, les panneaux sont assemblés entre eux directement au moyen d'au moins deux éléments coopérant entre eux.

Selon un troisième mode de réalisation, un rangement séparatif peut être obtenu par assemblage de plusieurs panneaux au moyen d'au moins un élément tel que décrit précédemment, deux panneaux pouvant être assemblés à la perpendiculaire directement entre eux au moyen d'au moins deux éléments.

### Description sommaire des figures

La manière de réaliser l'invention ainsi que les avantages qui en découlent ressortiront bien de la description du mode de réalisation qui suit, donné à titre indicatif, mais non limitatif, à l'appui des figures annexés dans lesquelles :
- les figures 1 et 2 sont des vues de dessus de deux exemples d'utilisation d'éléments, conformes à l'invention ;
- la figure 3 est une vue en perspective éclatée de l'assemblage entre deux éléments, conformément à l'invention ;
- la figure 4 est une vue de profil en coupe d'un élément, conformément à l'invention ;
- la figure 5 est une vue de face d'un élément, conforme à l'invention ;
- la figure 6 est une vue de dessus d'un élément, conforme à l'invention.

### Manière de réaliser l'Invention

Comme déjà évoqué, l'invention concerne un élément de solidarisation réversible comportant quatre faces parallèles deux à deux, destiné à permettre l'accrochage d'une paroi sur une structure porteuse.

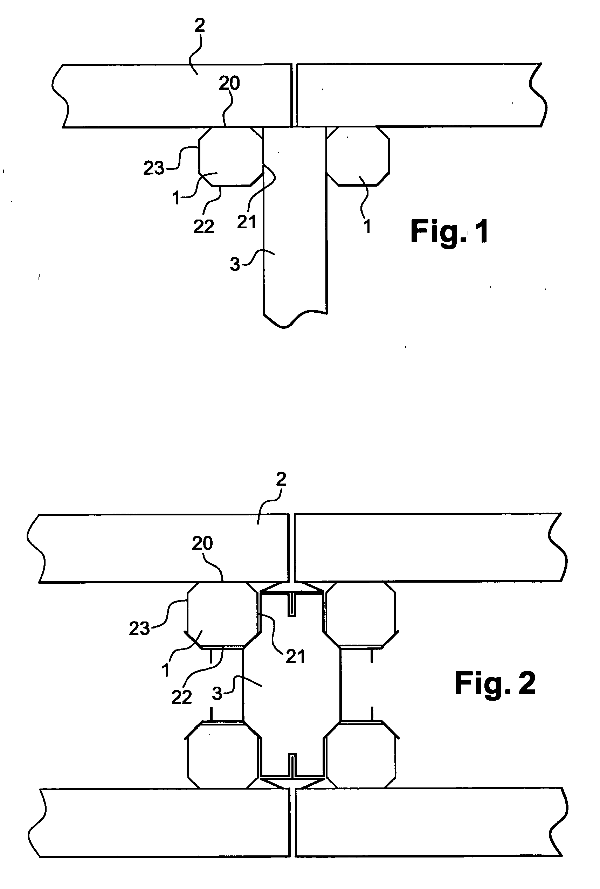

Tel que représentée à la figure 1, la structure porteuse (3) peut être une paroi sur laquelle la ou les parois (2) sont directement rapportées à 90°.

Pour ce faire, un premier élément (1) est rapporté sur la paroi (3) et solidarisé par l'une de ses faces latérales (21) au contact avec la paroi (3). D'autre part, la paroi (2) reçoit un second élément (1), dont l'orientation est inversée, et solidarisé à celle-ci par l'une de ses faces principales (20). Dans ce cas, ces éléments (1) peuvent permettre d'ériger un meuble de rangement séparatif.

Telle qu'illustrée à la figure 2, l'invention peut également être utilisée pour positionner et maintenir des panneaux de parement (2) sur une ossature métallique (3). Les arêtes à l'intersection des différentes faces (20,21,22,23) peuvent être chanfreinées pour faciliter la mise en place des éléments (1) sur l'ossature métallique (3).

De même que précédemment, dans ce cas, un premier élément (1) est rapporté sur l'ossature (3) et un second élément (1), solidarisé à la paroi (2), vient ensuite coopérer avec le premier élément (1), ledit second élément étant orienté de manière opposé à l'orientation dudit premier élément.

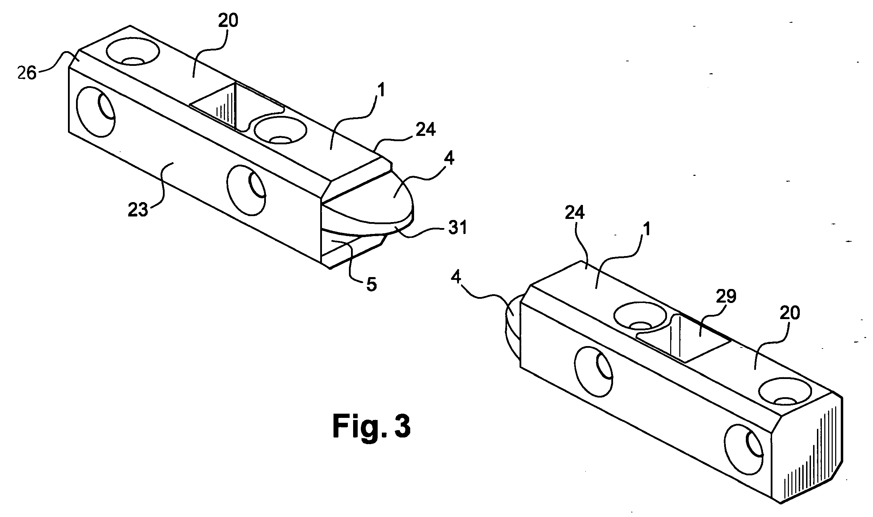

Tel que représenté à la figure 3, l'élément (1) comporte à la fois au niveau de son extrémité (24), une excroissance faisant office d'organe mâle (4) et un logement faisant office d'organe femelle (5). L'extrémité libre (31) de l'organe mâle (4) est susceptible de pénétrer à l'intérieur de l'organe femelle (5) de l'élément (1) en regard dont l'orientation est inversée.

Telles que représentées, les arêtes vives entre deux faces successives peuvent également être chanfreinées de façon à faciliter la mise en place de l'élément (1) sur notamment une armature métallique.

Des évidements (29) peuvent être réalisés de façon à optimiser la quantité de matière utilisée lors du moulage d'un élément (1). Ces évidements (29) peuvent également servir à rigidifier la structure de l'élément (1).

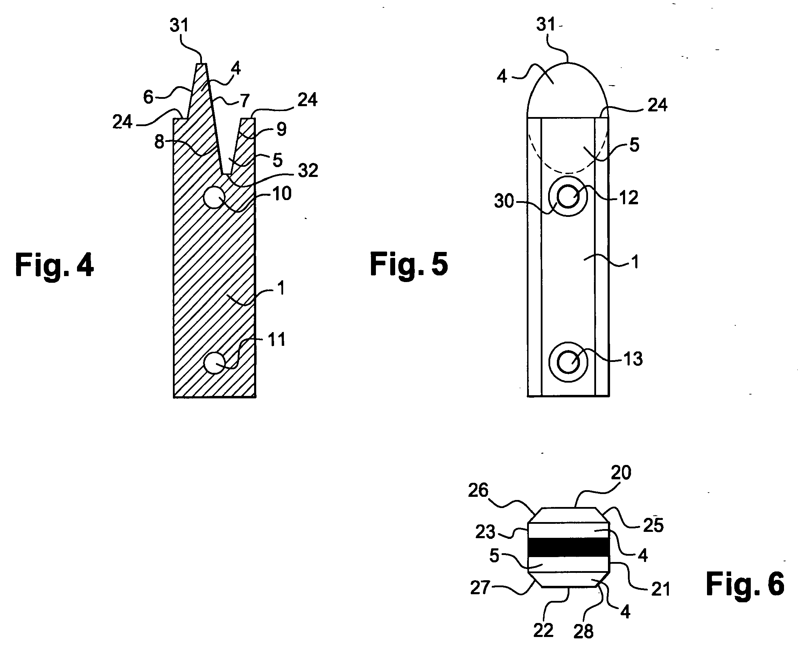

Tel que représenté à la figure 4, chaque élément (1) comporte un organe mâle (4), mais également un organe femelle (5). L'organe male (4) est formé dans le plan de la figure 4 par deux chants inclinés (6, 7) concourants au niveau de l'extrémité libre (31).

L'organe femelle (5) est quant à lui défini par deux chants inclinés (8, 9), qui se rejoignent au niveau d'une zone de concours (32). Lorsque l'élément (1) coopère avec un second élément (1), les extrémités (24) respectives viennent en contact l'une avec l'autre. Cependant, il n'est pas nécessaire que l'extrémité libre (31) d'un élément (1) vienne au contact de la zone de concours (32) d'un second élément (1).

Tel que représenté dans le plan de cette figure, l'élément (1) comporte deux perçages (10, 11) espacés selon un pas prédéterminé, ménagés au niveau de ses faces latérales. Ce même pas sera avantageusement réalisé sur la paroi ou l'ossature métallique sur laquelle il est destiné à être rapporté.

Tel que représentés à la figure 5, les organes mâle (4) et femelle (5) présentent un profil elliptique facilitant le positionnement de deux éléments (1) entre eux.

Ils présentent également deux perçages (12, 13) au niveau de leurs faces principales avantageusement espacés selon le même pas que celui séparant les perçages (10) et (11). Ces perçages (12, 13) permettent de solidariser l'élément (1) sur une paroi ou un support selon une deuxième orientation. De plus, les perçages (10, 11, 12, 13) peuvent comporter des fraisages (de forme conique creuse) pour permettre l'intégration de la tête de vis à l'intérieur du volume défini par l'élément (1).

Selon une caractéristique de l'invention, les perçages (10) et (12) d'une part, et (11) et (13) d'autre part, sont concourants.

Tel que représenté en figure 6, l'élément (1) comporte une section carrée pour permettre de réaliser des assemblages quelle que soit la face latérale (20, 21, 22, 23) en contact avec le support (3) ou la paroi (2).

Il ressort de ce qui précède qu'un élément conforme à l'invention présente de multiples avantages, notamment :
- il permet de fixer un panneau sur une structure au moyen de plusieurs éléments du même type ;
- il évite ainsi tous les problèmes engendrés par la multiplication de pièces de formes différentes pour réaliser un tel assemblage ;
- il forme une solution simple et peu coûteuse pour réaliser ce type d'assemblage;
- il permet de s'adapter à un grand nombre d'applications, tels que les murs mobiles, les cloisons mobiles, les cloisons amovibles, les cloisons démontables, les systèmes d'agencement, les systèmes d'habillage mural et les rangements séparatifs, puisqu'il peut être à la fois rapporté sur une structure métallique ou directement sur une paroi.

## Revendications

1. Elément (1) de solidarisation réversible comportant quatre faces (20, 21, 22, 23) parallèles deux à deux, destiné à permettre la fixation d'une paroi (2) sur une structure porteuse (3) ***caractérisé :***
• **en ce qu'**il comporte à la fois, au niveau de l'une de ses extrémités (24), une excroissance faisant office d'organe male (4), et un logement faisant office d'organe femelle (5), lesdits organes male (4) et femelle (5) étant • complémentaires de façon à permettre l'assemblage réversible desdits organes male (4) et femelle (5) lorsque deux des éléments (1) en question coopèrent entre eux,
• et, **en ce que** les organes male (4) et femelle (5) présentent un profil elliptique, favorisant le centrage des éléments entre eux lors de leur coopération.

2. Elément de solidarisation réversible selon la revendication 1, ***caractérisé* en ce que** l'organe male (4) comporte deux chants inclinés (6, 7) concourants au niveau de l'extrémité libre (31) dudit organe male (4).

3. Elément de solidarisation réversible selon la revendication 1, ***caractérisé* en ce que** l'organe femelle (5) comporte deux chants inclinés (8, 9).

4. Elément de solidarisation réversible selon la revendication 3, ***caractérisé* en ce que** la zone de concours (32) desdits chants (8, 9) de l'organe femelle (5) définit une zone d'appui éventuel de l'extrémité libre (31) de l'organe male (4) d'un second élément (1) coopérant avec l'élément (1) en question.

5. Elément de solidarisation réversible selon les revendication 2 et 3, ***caractérisé* en ce que** les chants inclinés (7) et (8) respectivement des organes male (4) et femelle (5) sont inscrits dans un même plan.

6. Elément de solidarisation réversible selon la revendication 1, ***caractérisé* en ce qu'**il comporte deux jeux de deux perçages (10, 11) et (12, 13) débouchant sur chacune de ses faces (20, 21, 22, 23) de façon à permettre la solidarisation de l'une de ses quatre faces (20, 21, 22, 23) sur un support au moyen de deux vis (16, 17).

7. Elément de solidarisation réversible selon la revendication 6, ***caractérisé* en ce que** les perçages (10, 11) et (12, 13) sont de même diamètre.

8. Elément de solidarisation réversible selon la revendication 6, ***caractérisé* en ce que** les perçages (10, 11) et (12, 13) comportent des axes sécants entre eux.

9. Elément de solidarisation réversible selon la revendication 1, ***caractérisé* en ce que** les arêtes définies par l'intersection de deux faces adjacentes dudit élément (1) sont chanfreinées de façon à faciliter le positionnement de l'élément (1) sur son support.

10. Elément de solidarisation réversible selon la revendication 1, ***caractérisé* en ce qu'**il est obtenu par moulage dans un matériau choisi dans le groupe comprenant les polyamides, les polyamides chargés en fibres de verre, les alliages à base de zinc, l'aluminium, l'acier, l'acier inoxydable.

11. Panneau de parement comportant au moins un élément (1) selon l'une des revendications 1 à 10, apte à coopérer avec un autre élément (1) solidarisé à une ossature métallique.

12. Panneau de cloison comportant au moins un élément (1) selon l'une des revendications 1 à 10, apte à coopérer avec un autre élément (1) solidarisé à un autre panneau de cloison.

13. Rangement séparatif obtenu par assemblage de plusieurs panneaux au moyen d'au moins deux éléments (1) selon l'une des revendications 1 à 10.

## Claims

1. Reversible fastening component (1) comprising four faces (20, 21, 22, 23) parallel in twos, intended to allow a wall (2) to be secured to a load-bearing structure (3) **characterized:**
■ **in that** it comprises at one and the same time, at one of its ends (24), a protuberance serving as a male member (4), and a socket serving as a female member (5), said male (4) and female (5) members being complementary to allow said male (4) and female (5) members to be assembled reversibly when two of the components (1) in question engage with each other,
■ and, **in that** the male (4) and female (5) members have an elliptical profile, helping the components to be centred relative to each other when they engage.

2. Reversible fastening component as claimed in claim 1, **characterized in that** the male member (4) comprises two inclined edges (6, 7) that converge at the free end (31) of said male member (4).

3. Reversible fastening component as claimed in claim 1, **characterized in that** the female member (5) comprises two inclined edges (8, 9).

4. Reversible fastening component as claimed in claim 3, **characterized in that** the area of convergence (32) of said edges (8, 9) of the female member (5) defines an area for potentially supporting the free end (31) of the male member (4) of a second component (1) engaging with the component (1) in question.

5. Reversible fastening component as claimed in claims 2 and 3, **characterized in that** the inclined edges (7) and (8) of the male (4) and female (5) members respectively are inscribed in one and the same plane.

6. Reversible fastening component as claimed in claim 1, **characterized in that** it comprises two sets of two through holes (10, 11) and (12, 13) on each of its faces (20, 21, 22, 23) so that one of its four faces (20, 21, 22, 23) can be fastened to a support by means of two screws (16, 17).

7. Reversible fastening component as claimed in claim 6, **characterized in that** the holes (10, 11) and (12, 13) are of the same diameter.

8. Reversible fastening component as claimed in claim 6, **characterized in that** the holes (10,11) and (12, 13) comprise axes that intersect each other.

9. Reversible fastening component as claimed in claim 1, **characterized in that** the ridges defined by the intersection of two adjacent faces of said component (1) are chamfered in such a way as to facilitate the positioning of the component (1) on its support.

10. Reversible fastening component as claimed in claim 1, **characterized in that** it is obtained by moulding out of a material chosen from the group that includes polyamides, glass fibre reinforced polyamides, zinc-based alloys, aluminium, steel, stainless steel.

11. Facing panel comprising at least one component (1) as claimed in one of claims 1 to 10, suitable for engaging with another component (1) fastened to a metal framework.

12. Partition panel comprising at least one component (1) as claimed in one of claims 1 to 10, suitable for engaging with another component (1) fastened to another partition panel.

13. Separate storage unit obtained by assembling a plurality of panels by means of at least two components (1) as claimed in one of claims 1 to 10.

## Patentansprüche

1. Element (1) zur reversiblen festen Verbindung, das vier paarweise zueinander parallele Seiten (20, 21, 22, 23) umfasst und dazu bestimmt ist, die Befestigung einer Wand (2) an einer Tragstruktur (3) zu gestatten, **dadurch gekennzeichnet,**
■ **dass** es an einem seiner Enden (24) einen als Steckorgan (4) dienenden vorsprung und gleichzeitig eine als Aufnahmeorgan (5) dienende Aussparung aufweist, wobei das steckorgan (4) und das Aufnahmeorgan (5) zueinander komplementär sind, so dass sie die reversible Zusammenfügung des Steckorgans (4) und des Aufnahmeorgans (5) gestatten, wenn zwei der betreffenden Elemente (1) miteinander zusammenwirken,
■ und **dass** das Steckorgan (4) und das Aufnahmeorgan (5) ein elliptisches Profil aufweisen, das die gegenseitige Zentrierung der Elemente bei ihrem Zusammenwirken begünstigt.

2. Element zur reversiblen festen verbindung nach Anspruch 1, **dadurch gekennzeichnet, dass** das Steckorgan (4) zwei schräge Flächen (6, 7) umfasst, die am freien Ende (31) des Steckorgans (4) zusammenlaufen.

3. Element zur reversiblen festen Verbindung nach Anspruch 1, **dadurch gekennzeichnet, dass** das Aufnahmeorgan (5) zwei schräge Flächen (8, 9) aufweist.

4. Element zur reversiblen festen Verbindung nach Anspruch 3, **dadurch gekennzeichnet, dass** die Zone (32), in der die Flächen (8, 9) des Aufnahmeorgans (5) zusammenlaufen, eine Zone für die eventuelle Auflage des freien Endes (31) des Steckorgans (4) eines mit dem betreffenden Element (1) zusammenwirkenden zweiten Elements (1) bildet.

5. Element zur reversiblen festen Verbindung nach den Ansprüchen 2 und 3, **dadurch gekennzeichnet, dass** die schrägen Flächen (7) und (8) des Steckorgans (4) bzw. des Aufnahmeorgans (5) in einer gemeinsamen Ebene liegen.

6. Element zur reversiblen festen Verbindung nach Anspruch 1, **dadurch gekennzeichnet, dass** es zwei Sätze von zwei Bohrungen (10, 11) und (12, 13) umfasst, die auf jeder seiner Seiten (20, 21, 22, 23) ausmünden, so dass die Befestigung einer seiner vier Seiten (20, 21, 22, 23) an einem Träger mit Hilfe von zwei Schrauben (16, 17) gestattet wird.

7. Element zur reversiblen festen Verbindung nach Anspruch 6, **dadurch gekennzeichnet, dass** die Bohrungen (10, 11) und (12, 13) denselben Durchmesser aufweisen.

8. Element zur reversiblen festen Verbindung nach Anspruch 6, **dadurch gekennzeichnet, dass** die Bohrungen (10, 11) und (12, 13) sich untereinander schneidende Achsen aufweisen.

9. Element zur reversiblen festen Verbindung nach Anspruch 1, **dadurch gekennzeichnet, dass** die durch den Schnitt von zwei benachbarten Seiten des Elements (1) gebildeten Kanten abgeschrägt sind, so dass die Positionierung des Elements (1) auf seinem Träger erleichtert wird.

10. Element zur reversiblen festen Verbindung nach Anspruch 1, **dadurch gekennzeichnet, dass** es durch Formen aus einem Werkstoff hergestellt ist, der aus der Gruppe ausgewählt ist, die Polyamide, mit Glasfasern verstärkte Polyamide, Zinklegierungen, Aluminium, Stahl, rostfreien Stahl umfasst.

11. Verkleidungsplatte, die mindestens ein Element (1) nach einem der Ansprüche 1 bis 10 umfasst, das mit einem anderen, an einem Metallgerüst befestigten Element (1) zusammenwirken kann.

12. Wandplatte, die mindestens ein Elemente (1) nach einem der Ansprüche 1 bis 10 umfasst, das mit einem anderen, an einer anderen Wandplatte befestigten Element (1) zusammenwirken kann.

13. Trennregal, das durch Zusammensetzen von mehreren Platten mit Hilfe von mindestens zwei Elementen (1) nach einem der Ansprüche 1 bis 10 hergestellt ist.
